# EUROPEAN PATENT APPLICATION

(11) **EP 4 679 913 A1**
(43) Date of publication of application: **14.01.2026**
(21) Application number: 24766384.2
(22) Date of filing: 03.03.2024
(51) Int. Cl.: H04W 72/0446

(54) **METHOD AND APPARATUS FOR NODE USED FOR WIRELESS COMMUNICATION**

(30) Priority: 06.03.2023 CN 202310210463
(71) Applicant: Apogee Networks, LLC, Dallas, TX 75201 (US)
(72) Inventor: JIANG, Qi, Shanghai 201206 (CN); WANG, Ping, Shanghai 201206 (CN); ZHANG, Xiaobo, Shanghai 201206 (CN)
(74) Representative: Gunzelmann, Rainer
(86) International application number: PCT/CN2024/079773
(87) International publication number: WO 2024/183669

(57) **Abstract**

The present application discloses a method and apparatus for a node used for wireless communication. The method comprises: a first node receiving first signaling, wherein the first signaling is used for configuring K1 time unit sets; receiving target signaling, wherein the target signaling is used for determining a first time unit set from the K1 time unit sets; performing wireless resource management measurement on the basis of a reference signal in the first time unit set, wherein K1 is a positive integer greater than 1, the K1 time unit sets are all associated to a target cell, the target cell is a cell outside a serving cell of the first node, and the target signaling is MAC layer signaling or physical layer signaling. The present application improves a reference signal resource configuration for neighbor cell measurement so as to improve the flexibility, and adapts to the reference signal resource configuration in different states of a neighbor cell, thereby improving the energy-saving effect of a terminal and a base station while ensuring the measurement accuracy.

## Description

### Technical Field

The present application relates to a transmission method and apparatus in a wireless communication system, in particular to a method and apparatus for wireless channel measurement and configuration.

### Background Art

In the future, the application scenes of a wireless communication system will become more and more diversified, and different application scenes impose different performance requirements for the system. In order to meet the different performance requirements of various application scenarios, it was decided at the 72nd plenary meeting of the 3GPP (3rd Generation Partner Project) RAN (Radio Access Network) to carry out study on the new radio (NR) technology (or 5G). At the 75th plenary meeting of the 3GPP RAN, the WI (Work Item) of the new radio (NR) technology was approved, and the standardization work on NR was initiated.

Mobility of user equipment (UE) is an important feature of a radio network. In order to further enhance mobility performance of the UE, the 3rd generation partner project (3GPP) radio access network (RAN) #94e meeting decided to carry out a WI of "further new radio (NR) mobility enhancements". Therein, Layer 1 (L1)/Layer 2 (L2) triggered mobility (LTM) is an important research direction for reducing delay, overhead and interruption time.

Network Energy Saving (NES) is of great significance for environmental sustainability, reducing an impact (greenhouse gas emissions) on environment, and saving operating costs. As the 5th generation partnership project (5G) becomes more prevalent across industries and geographic regions, much higher data rates are required to handle more advanced services and applications (such as XR), resulting in increasingly dense networks, and the usage of more antennas, greater bandwidth, and more frequency bands. In order to keep the impact of 5G on the environment within a controllable range, new solutions need to be studied to improve network energy saving. Therefore, the 3GPP RAN #94 meeting approved a study item (SI) of the "Study on network energy savings", which supports technical enhancements in the aspects of time domains, frequency domains, spatial domains, power domains, etc.

### Summary of the Invention

In existing systems, a terminal performs wireless resource management measurement according to a reference signal (RS) in RS resources configured by a base station and selects an appropriate camped cell. In future network energy-saving scenarios based on the base station, configuration and transmission of reference signals under the base station will become more flexible. One possible scenario is that physical layer or medium access control (MAC) layer signaling sent by the base station will affect the configuration of reference signal resources used by the base station for wireless resource management measurement, which in turn affects the selection and switching of the camped cell of the terminal.

In view of the above problem, the present application discloses a solution. It should be noted that although the original intention of the present application is for the network energy-saving scenarios, the present application can also be applied to other non-network energy-saving scenarios. Further, using a unified design scheme for different scenarios (such as other non-network energy-saving scenarios, including but not limited to capacity enhancement systems, short-range communication systems, unlicensed frequency domain communication, Internet of Things (IoT), ultra reliable low latency communication (URLLC) networks, Internet of Vehicles, etc.) can also help reduce hardware complexity and costs. In case of no conflict, embodiments and features in the embodiments in any node of the present application can be applied to any other node. In the absence of conflicts, the embodiments and features in the embodiments of the present application may be arbitrarily combined with each other.

In particular, the interpretation of the terminologies, nouns, functions, and variables in the present application (if not specifically noted) can refer to the definitions in the specification protocols TS36 series, TS38 series, and TS37 series of 3GPP. If necessary, reference can be made to 3GPP standards TS38.211, TS38.212, TS38.213, TS38.214, TS38.215, TS38.321, TS38.331, TS38.305, TS38.304, and TS37.355 to assist in understanding the present application.

As one embodiment, the interpretation of the terminology in the present application is based on the definitions provided in the TS36 series of the 3GPP specifications.

As one embodiment, the interpretation of the terminology in the present application is based on the definitions provided in the TS38 series of the 3GPP specifications.

As one embodiment, the interpretation of the terminology in the present application is based on the definitions provided in the TS37 series of the 3GPP specifications.

As one embodiment, the interpretation of the terminology in the present application is based on the definition of the specification protocol of the Institute of Electrical and Electronics Engineers (IEEE).

The present application discloses a method used in a first node for wireless communication, comprising:
receiving first signaling, the first signaling being used for configuring K1 time unit sets;
receiving target signaling, the target signaling being used for determining a first time unit set from the K1 time unit sets; and
performing wireless resource management measurement on the basis of a reference signal in the first time unit set,
wherein K1 is a positive integer greater than 1, the K1 time unit sets are all associated to a target cell, the target cell is a cell other than a serving cell of the first node, and the target signaling is MAC layer signaling or physical layer signaling.

As one embodiment, the problem to be solved by the present application includes: how the first node determines the configuration of the reference signal for wireless resource management measurement of the target cell.

As one embodiment, the characteristics of the above method include: the first signaling, namely, RRC signaling, configuring reference signal resources used for wireless resource management measurement, which ensures backward compatibility of a system.

As one embodiment, the characteristics of the above method include: the first node selecting an appropriate reference signal resource configuration according to the target signaling to perform wireless resource management measurement on the target cell, which is conducive to improving the accuracy of the measurement.

As one embodiment, the characteristics of the above method include: a sender of the target signaling including the serving cell of the first node.

As one embodiment, the characteristics of the above method include: a sender of the target signaling including the target cell.

As one embodiment, the benefits of the above method include: the first node dynamically determining the reference signal resources for wireless resource management measurement according to signaling of a protocol layer below the RRC layer (such as the MAC layer or physical layer signaling).

As one embodiment, the benefits of the above method include: facilitating the terminal to reasonably select a camped cell.

According to one aspect of the present application, the above method is characterized in that the target signaling is used for determining a time interval between downlink timing of the first signaling and downlink timing of the reference signal transmitted in the first time unit set.

As one embodiment, the characteristics of the above method include: the target signaling being used for determining downlink timing synchronization of a cell other than the serving cell of the first node.

As one embodiment, the benefits of the above method include: the first node being able to achieve downlink synchronization of a non-serving cell without receiving a system message of the non-serving cell.

According to one aspect of the present application, the above method is characterized in that the target signaling is used for determining an effective moment of the reference signal in the first time unit set.

As one embodiment, the characteristics of the above method include: the target signaling being used for implicitly determining the reference signal resources used for wireless resource management measurement.

As one embodiment, the characteristics of the above method include: the target signaling being used for implicitly determining when to perform wireless resource management measurement using the reference signal in the first time unit set.

As one embodiment, the benefits of the above method include: no additional signaling being required to indicate when to perform wireless resource management measurement using the reference signal in the first time unit set, thereby reducing signaling overhead.

According to one aspect of the present application, the above method is characterized in that the target signaling is used for determining a first power offset value from a plurality of power offset values, the first power offset value is used for mobility management for the target cell, and the plurality of power offset values are associated to the target cell.

As one embodiment, the benefits of the above method include: the plurality of power offset values being respectively adapted to neighbor cell measurement in different scenarios, which is beneficial for the first node to trigger measurement event reports according to different power offset values in different scenarios.

According to one aspect of the present application, the above method is characterized in that the K1 time unit sets include at least the first time unit set and a second time unit set, and the first time unit set is a subset of the second time unit set.

As one embodiment, the characteristics of the above method include: the first time unit set and the second time unit set being respectively used for wireless resource management measurement of the target cell in different states.

As one embodiment, the characteristics of the above method include: adapting to an energy-saving state of the target cell through the first time unit set.

As one embodiment, the benefits of the above method include: ensuring the reliability of evaluating neighbor cell measurement on the basis of saving energy on a base station side.

According to one aspect of the present application, the above method is characterized in that the K1 time unit sets are respectively configured to K1 reference signal resources, or the K1 time unit sets are configured to the same reference signal resource.

As one embodiment, the characteristics of the above method include: the K1 time unit sets corresponding to different periodic configurations of the same reference signal resource, which can achieve energy saving by reducing transmission density of the reference signals in the reference signal resource without changing the reference signal resources.

As one embodiment, the characteristics of the above method include: the K1 time unit sets corresponding to Kl reference signal resources, which can flexibly select different reference signal resources for neighbor cell measurement in different scenarios, thereby improving measurement accuracy.

According to one aspect of the present application, the above method is characterized in that the serving cell of the first node receives first information from the target cell through an Xn interface, and the first information is used for triggering transmission of the target signaling.

As one embodiment, the characteristics of the above method include: the first information including energy-saving state information of the target cell.

As one embodiment, the characteristics of the above method include: the first information being used for mobility management of the first node.

As one embodiment, the characteristics of the above method include: the first information including a new RRC configuration of the target cell for the first node.

According to one aspect of the present application, the above method is characterized in that the first node comprises one piece of user equipment.

According to one aspect of the present application, the above method is characterized in that the first node comprises one relay node.

The present application discloses a method used in a second node for wireless communication, comprising:
sending first signaling, the first signaling being used for configuring K1 time unit sets; and
sending target signaling, the target signaling being used for determining a first time unit set from the K1 time unit sets,
wherein a recipient of the target signaling comprises a first node, and the first node performs wireless resource management measurement on the basis of a reference signal in the first time unit set, K1 is a positive integer greater than 1, the K1 time unit sets are all associated to a target cell, the target cell is a cell other than a serving cell of the first node, and the target signaling is MAC layer signaling or physical layer signaling.

According to one aspect of the present application, the above method is characterized in that the target signaling is used for determining a time interval between downlink timing of the first signaling and downlink timing of the reference signal transmitted in the first time unit set.

According to one aspect of the present application, the above method is characterized in that the target signaling is used for determining an effective moment of the reference signal in the first time unit set.

According to one aspect of the present application, the above method is characterized in that the target signaling is used for determining a first power offset value from a plurality of power offset values, the first power offset value is used for mobility management for the target cell, and the plurality of power offset values are associated to the target cell.

According to one aspect of the present application, the above method is characterized in that the K1 time unit sets include at least the first time unit set and a second time unit set, and the first time unit set is a subset of the second time unit set.

According to one aspect of the present application, the above method is characterized in that the K1 time unit sets are respectively configured to K1 reference signal resources, or the K1 time unit sets are configured to the same reference signal resource.

According to one aspect of the present application, the above method is characterized in that the serving cell of the first node receives first information from the target cell through an Xn interface, and the first information is used for triggering transmission of the target signaling.

According to one aspect of the present application, the above method is characterized in that the second node is a base station.

According to one aspect of the present application, the above method is characterized in that the second node is user equipment.

According to one aspect of the present application, the above method is characterized in that the second node is a relay node.

According to one aspect of the present application, the above method is characterized in that the second node includes one transmit/receive point (TRP).

According to one aspect of the present application, the above method is characterized in that the second node includes one centralized unit (CU).

According to one aspect of the present application, the above method is characterized in that the second node includes one distributed unit (DU).

The present application discloses a device used in a first node for wireless communication, comprising:
a first receiver for receiving first signaling, the first signaling being used for configuring K1 time unit sets; receiving target signaling, the target signaling being used for determining a first time unit set from the K1 time unit sets; and performing wireless resource management measurement on the basis of a reference signal in the first time unit set,
wherein K1 is a positive integer greater than 1, the K1 time unit sets are all associated to a target cell, the target cell is a cell other than a serving cell of the first node, and the target signaling is MAC layer signaling or physical layer signaling.

The present application discloses a device used in a second node for wireless communication, comprising:
a first transmitter for sending first signaling, the first signaling being used for configuring K1 time unit sets; and sending target signaling, the target signaling being used for determining a first time unit set from the K1 time unit sets,
wherein a recipient of the target signaling comprises a first node, and the first node performs wireless resource management measurement on the basis of a reference signal in the first time unit set, K1 is a positive integer greater than 1, the K1 time unit sets are all associated to a target cell, the target cell is a cell other than a serving cell of the first node, and the target signaling is MAC layer signaling or physical layer signaling.

As one embodiment, compared with the traditional solution, the present application has the following advantages:
it helps to save network energy;
it is beneficial for the terminal to reasonably select the camped cell; and
the first node dynamically determines the reference signal resources for wireless resource management measurement according to the signaling of the protocol layer below the RRC layer (such as the MAC layer or physical layer signaling).

### Brief Description of the Drawings

Other features, purposes and advantages of the present application will become more apparent from reading the detailed description of the non-limiting embodiments made with reference to the following drawings:
FIG. 1 shows a flowchart of a first node according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of transmission between a first node and a second node according to one embodiment of the present application;
FIG. 6 shows a flowchart of transmission between a first node and a second node according to one embodiment of the present application;
FIG. 7 shows a flowchart of transmission between a second node and a third node according to one embodiment of the present application;
FIG. 8 shows a schematic diagram of a positional relationship between a serving cell and a target cell of a first node according to one embodiment of the present application;
FIG. 9 shows a schematic diagram of target signaling being used for determining a time interval according to one embodiment of the present application;
FIG. 10 shows a schematic diagram of target signaling being used for determining an effective moment of a reference signal in a first time unit set according to one embodiment of the present application;
FIG. 11 shows a schematic diagram of a first time unit set and a second time unit set according to one embodiment of the present application;
FIG. 12 shows a schematic diagram of a relationship between a time unit set and a reference signal resource according to one embodiment of the present application;
FIG. 13 shows a schematic diagram of a relationship between a time unit set and a reference signal resource according to another embodiment of the present application;
FIG. 14 shows a schematic diagram of target signaling being used for determining a first power offset value according to one embodiment of the present application.
FIG. 15 shows a structural block diagram of a processing apparatus in a first node according to one embodiment of the present application;
FIG. 16 shows a structural block diagram of a processing apparatus in a second node according to one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

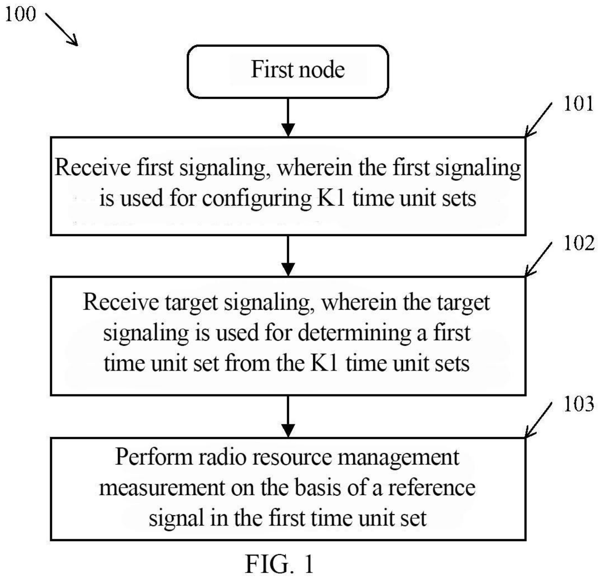

Embodiment 1 illustrates a flowchart of a first node according to one embodiment of the present application, as shown in FIG. 1. In FIG. 1, each box represents one step. In particular, the order of steps in the blocks does not represent a specific time sequence relation between the steps.

In step 101, a first node receives first signaling, the first signaling being used for configuring K1 time unit sets; in step 102, the first node receives target signaling, the target signaling being used for determining a first time unit set from the K1 time unit sets; and in step 103, the first node performs wireless resource management measurement on the basis of a reference signal in the first time unit set.

In Embodiment 1, K1 is a positive integer greater than 1; the K1 time unit sets are all associated to a target cell, the target cell is a cell other than a serving cell of the first node, and the target signaling is MAC layer signaling or physical layer signaling.

As one embodiment, the MAC layer refers to: Medium Access Control Layer.

As one embodiment, the first signaling is carried by higher layer signaling.

As one embodiment, the first signaling includes radio resource control (RRC) signaling.

As one embodiment, the first signaling is transmitted through the RRC signaling.

As one embodiment, the first signaling is carried by the RRC signaling.

As one embodiment, the first signaling includes information in all or part of fields in one RRC information element (IE).

As one embodiment, the first signaling is carried by one RRC IE.

As one embodiment, the first signaling includes part or all of fields in MeasConfig IE.

As one embodiment, the first signaling includes part or all of fields in MeasObjectToAddModList IE.

As one embodiment, the first signaling includes part or all of fields in MeasObjectNR IE.

As one embodiment, the first signaling includes part or all of fields in ReferenceSignalConfig.

As one embodiment, the first signaling includes part or all of fields in csi-rs-ResourceConfigMobility IE.

As one embodiment, the first signaling includes part or all of fields in CSI-RS-CellMobility IE.

As one embodiment, the first signaling includes part or all of fields in CSI-RS-Resource-Mobility IE.

As one embodiment, the first signaling includes part or all of fields in ssb-ConfigMobility IE.

As one embodiment, the first signaling is transmitted on a serving cell of the first node.

As one embodiment, a sender of the first signaling is the serving cell of the first node.

As one embodiment, time units in the K1 time unit sets are periodically distributed.

As one embodiment, time units in the K1 time unit sets are distributed at equal intervals.

As one embodiment, time units in the K1 time unit sets are non-periodically distributed.

As one embodiment, time units in the K1 time unit sets are distributed at unequal intervals.

As one embodiment, any time unit set of the K1 time unit sets includes a plurality of time units.

As one embodiment, any time unit set of the K1 time unit sets includes a plurality of inconsecutive time units.

As one embodiment, any time unit set of the K1 time unit sets includes time units in the number of a positive integer greater than 1.

As one embodiment, time units included in any time unit set of the K1 time unit sets are discrete.

As one embodiment, time units included in any time unit set of the K1 time unit sets are periodically distributed.

As one embodiment, time units included in any time unit set of the K1 time unit sets are distributed at equal intervals.

As one embodiment, K1 is equal to 2.

As one embodiment, K1 is equal to 3 or 4.

As one embodiment, K1 is a positive integer greater than 2.

As one embodiment, the first time unit set includes time units in the number of a positive integer greater than 1.

As one embodiment, the time units in the present application are slots.

As one embodiment, the time units in the present application are subframes.

As one embodiment, the time units in the present application include a positive integer number of consecutive multi-carrier symbols.

As one embodiment, the symbols are filter bank multi carrier (FBMC) symbols.

As one embodiment, the symbols are orthogonal frequency division multiplexing (OFDM) symbols.

As one embodiment, the symbols are OFDM symbols containing cyclic prefixes (CPs).

As one embodiment, the symbols are discrete Fourier transform spreading OFDM (DFT-S-OFDM) symbols containing CPs.

As one embodiment, the symbol is obtained after the output of a transform precoder undergoes the generation of an OFDM symbol.

As one embodiment, the K1 time unit sets are all associated to one NZP-CSI-RS-ResourceSet.

As one embodiment, the K1 time unit sets are all associated to one NZP-CSI-RS-ResourceSetId.

As one embodiment, the K1 time unit sets are respectively associated to K1 CSI-RS resources.

As one embodiment, the K1 time unit sets are respectively associated to one CSI-RS resource.

As one embodiment, the K1 time unit sets are all associated to the same CSI-RS resource.

As one embodiment, the K1 time unit sets are respectively associated to K1 NZP-CSI-RS-ResourceIds.

As one embodiment, the K1 time unit sets are all associated to the same NZP-CSI-RS-ResourceId.

As one embodiment, the K1 time unit sets are respectively associated to K1 SSBs.

As one embodiment, the K1 time unit sets are all associated to one SSB.

As one embodiment, the K1 time unit sets are respectively associated to K1 SSB-Indexes.

As one embodiment, the K1 time unit sets are all associated to one SSB-Index.

As one embodiment, the reference signals transmitted in the K1 time unit sets are all quasi co-located (QCLed).

As one embodiment, quasi co-location of two reference signals means that the large-scale properties of a channel experienced by one of the two reference signals can be inferred from the large-scale properties of a channel experienced by the other of the two reference signals.

As one embodiment, the large-scale properties include one or more of delay spread, Doppler spread, Doppler shift, average delay, or a spatial Rx parameter.

As one embodiment, the sentence "the reference signals transmitted in the K1 time unit sets are all quasi co-located" means that the first node assumes that the reference signals transmitted in the K1 time unit sets are all quasi co-located.

As one embodiment, the sentence "the reference signals transmitted in the K1 time unit sets are all quasi co-located" means that the first node may assume that the reference signals transmitted in the K1 time unit sets are all quasi co-located.

As one embodiment, the sentence "the reference signals transmitted in the K1 time unit sets are all quasi co-located" means that the sender of the reference signals in the K1 time unit sets assumes that the first node assumes that the reference signals transmitted in the K1 time unit sets are all quasi co-located.

As one embodiment, the sentence "the reference signals transmitted in the K1 time unit sets are all quasi co-located" means that the first node uses the same spatial domain filter to receive the reference signals transmitted in the K1 time unit sets.

As one embodiment, the sentence "the reference signals transmitted in the K1 time unit sets are all quasi co-located" means that the sender of the reference signals in the K1 time unit sets assumes that the first node uses the same spatial domain filter to receive the reference signals transmitted in the K1 time unit sets.

As one embodiment, the sentence "the reference signals transmitted in the K1 time unit sets are all quasi co-located" means that the first node may infer spatial reception parameters of reference signals other than the one reference signal in the K1 time unit set from spatial reception parameters of one reference signal transmitted in the K1 time unit set.

As one embodiment, the first signaling is used for configuring the K1 time unit sets.

As one embodiment, the first signaling is used for determining the K1 time unit sets.

As one embodiment, the first signaling is used for indicating the K1 time unit sets.

As one embodiment, the first signaling is used for configuring K1 reference signal resources, and the K1 reference signal resources are respectively associated to the K1 time unit sets.

As one sub-embodiment of the above embodiment, time domain resources occupied by the K1 reference signal resources belong to the K1 time unit sets respectively.

As one embodiment, the first signaling is used for configuring a target reference signal resource, and the target reference signal resource is associated to the K1 time unit sets.

As one sub-embodiment of the above embodiment, a time domain resource occupied by the target reference signal resource is one time unit set among the K1 time unit sets.

As one embodiment, the target signaling is MAC layer signaling or physical layer signaling.

As one embodiment, the target signaling includes dynamic signaling.

As one embodiment, the target signaling is dynamic signaling.

As one embodiment, the target signaling is MAC layer signaling.

As one embodiment, the target signaling includes a MAC control element (CE).

As one embodiment, the target signaling is a MAC CE.

As one embodiment, the target signaling includes a MAC protocol data unit (PDU).

As one embodiment, the target signaling is a MAC PDU.

As one embodiment, the target signaling includes a MAC subheader.

As one embodiment, the target signaling is a MAC subheader.

As one embodiment, the target signaling is physical layer signaling.

As one embodiment, the target signaling is physical layer control signaling.

As one embodiment, the target signaling includes information in one or more domains of downlink control information (DCI).

As one embodiment, the target signaling is one DCI.

As one embodiment, the CRC of the target signaling is scrambled by an RNTI other than a C-RNTI.

As one embodiment, the CRC of the target signaling is scrambled by a cell-common RNTI.

As one embodiment, the CRC of the target signaling is scrambled by an RNTI other than a UE-dedicated RNTI.

As one embodiment, the target signaling is sidelink control information (SCI).

As one embodiment, the target signaling is slot format indication (SFI).

As one embodiment, the target signaling is used for determining the first time unit set from the K1 time unit sets.

As one embodiment, the target signaling is used for indicating the first time unit set from the K1 time unit sets.

As one embodiment, the target signaling includes a first domain, and the first domain is used for triggering the first time unit set from the K1 time unit sets.

As one embodiment, the first time unit set includes a plurality of time units.

As one embodiment, the first time unit set includes a plurality of inconsecutive time units.

As one embodiment, the first time unit set includes time units in the number of a positive integer greater than 1.

As one embodiment, time units included in the first time unit set are discrete.

As one embodiment, time units included in the first time unit set are periodically distributed.

As one embodiment, time units included in the first time unit are distributed at equal intervals.

As one embodiment, the reference signal in the first time unit set includes a baseband signal.

As one embodiment, the reference signal in the first time unit set includes a wireless signal.

As one embodiment, the reference signal in the first time unit set includes a radio frequency signal.

As one embodiment, the reference signal in the first time unit set includes a channel state information reference signal (CSI-RS).

As one embodiment, the reference signal in the first time unit set is a CSI-RS.

As one embodiment, the reference signal in the first time unit set includes a non-zero-power-CSI-RS (NZP-CSI-RS).

As one embodiment, the reference signal in the first time unit set is a NZP-CSI-RS.

As one embodiment, the reference signal in the first time unit set includes phase-tracking reference signal (PTRS).

As one embodiment, the reference signal in the first time unit set is a PTRS.

As one embodiment, the reference signal in the first time unit set includes a demodulation reference signal (DMRS).

As one embodiment, the reference signal in the first time unit set is a DMRS.

As one embodiment, the reference signal in the first time unit set includes a tracking reference signal (TRS).

As one embodiment, the reference signal in the first time unit set is a TRS.

As one embodiment, the reference signal in the first time unit set includes a primary synchronization signal (PSS).

As one embodiment, the reference signal in the first time unit set includes a secondary synchronization signal (SSS).

As one embodiment, the reference signal in the first time unit set includes a physical broadcast channel (PBCH).

As one embodiment, the reference signal in the first time unit set includes a synchronization signal block (SSB).

As one embodiment, the reference signal in the first time unit set is a synchronization signal block (SSB).

As one embodiment, the reference signal in the first time unit set includes an SSB (SS/PBCH, synchronization signal/physical broadcast channel).

As one embodiment, the reference signal in the first time unit set is an SSB (SS/PBCH, synchronization signal/physical broadcast channel).

Typically, the reception occasions of the PBCH, PSS, and SSS are in consecutive symbols and form an SS/PBCH block.

As one embodiment the reference signal in the first time unit set includes at least one of a CSI-RS resource or an SSB.

As one embodiment, the reference signal in the first time unit set includes a CSI-RS port.

As one embodiment, the reference signal in the first time unit set includes an antenna port.

As one embodiment, the reference signal in the first time unit set includes a reference signal port.

As one embodiment, the reference signal in the first time unit set is transmitted in the first time unit set.

As one embodiment, a time domain resource occupied by the reference signal in the first time unit set includes the first time unit set.

As one embodiment, a time domain resource occupied by the reference signal in the first time unit set is the first time unit set.

As one embodiment, the reference signal in the first time unit set is used for wireless resource measurement management.

As one embodiment, the wireless resource management measurement includes layer 1 reference signal received power (L1-RSRP) measurement.

As one embodiment, the wireless resource management measurement includes layer 3 reference signal received power (L3-RSRP) measurement.

As one embodiment, the wireless resource management measurement includes layer 1 signal to noise and interference ratio (L1-SINR) measurement.

As one embodiment, the wireless resource management measurement includes layer 3 signal to noise and interference ratio (L3-SINR) measurement.

As one embodiment, the wireless resource management measurement includes reference signal received quality (RSRQ) measurement.

As one embodiment, the wireless resource management measurement includes received signal strength indicator (RSSI) measurement.

As one embodiment, the wireless resource management measurement includes intra-frequency measurement.

As one embodiment, the wireless resource management measurement includes inter-frequency measurement.

As one embodiment, the wireless resource management measurement includes evaluating cell selection.

As one embodiment, the wireless resource management measurement includes evaluating cell reselection.

As one embodiment, the wireless resource management measurement includes evaluating cell handover.

As one embodiment, the wireless resource management measurement includes mobile management.

As one embodiment, the wireless resource management measurement includes initiating handover to the target cell.

As one embodiment, the wireless resource management measurement includes initiating random access (RA) to the target cell.

As one embodiment, the behavior of "performing wireless resource management measurement on the basis of the reference signal in the first time unit set" includes receiving the reference signal in the first time unit set.

As one sub-embodiment of the above embodiment, the behavior of "receiving the reference signal in the first time unit set" includes receiving the reference signal according to time domain parameters configured to the first time unit set.

As one sub-embodiment of the above embodiment, the behavior of "receiving the reference signal in the first time unit set" includes receiving the reference signal according to QCL parameters configured to the reference signal in the first time unit set.

As one embodiment, the behavior of "performing wireless resource management measurement on the basis of the reference signal in the first time unit set" includes receiving the reference signal in the first time unit set and determining RSRP of the reference signal.

As one embodiment, the behavior of "performing wireless resource management measurement on the basis of the reference signal in the first time unit set" includes receiving the reference signal in the first time unit set and determining RSRQ of the reference signal.

As one embodiment, the behavior of "performing wireless resource management measurement on the basis of the reference signal in the first time unit set" includes receiving the reference signal in the first time unit set and determining RSSI of the reference signal.

As one embodiment, the behavior of "performing wireless resource management measurement on the basis of the reference signal in the first time unit set" includes receiving the reference signal in the first time unit set and determining SINR of the reference signal.

As one embodiment, the K1 time unit sets are all configured to the target cell.

As one embodiment, the statement "the K1 time unit sets are all associated to the target cell" means that RRC signaling for configuring the K1 time unit sets is also used for indicating an identity of the target cell.

As one sub-embodiment of the above embodiment, the identity of the target cell includes a PCID of the target cell.

As one sub-embodiment of the above embodiment, the identity of the target cell includes ServCellIndex of the target cell.

As one sub-embodiment of the above embodiment, the identity of the target cell includes PhysCellId of the target cell.

As one embodiment, the statement "the K1 time unit sets are all associated to the target cell" means that the K1 time unit sets are all configured to transmit the reference signal of the target cell.

As one embodiment, the statement "the K1 time unit sets are all associated to the target cell" means that any time unit set of the K1 time unit sets is configured to transmit the reference signal of the target cell.

As one embodiment, the statement "the K1 time unit sets are all associated to the target cell" means that the reference signals transmitted in the K1 time unit sets are all sent in the target cell.

As one embodiment, the statement "the K1 time unit sets are all associated to the target cell" means that the reference signals in the K1 time unit sets are all associated with the target cell.

As one embodiment, the statement "the K1 time unit sets are all associated to the target cell" means that the cell identity of the target cell is used for generating the reference signals in the K1 time unit sets.

As one embodiment, the statement "the K1 time unit sets are all associated to the target cell" means that the reference signals transmitted in the K1 time unit sets belong to or are configured to the target cell.

As one embodiment, the statement "the K1 time unit sets are all associated to the target cell" means that the reference signals transmitted in the K1 time unit sets are quasi co-located with SS/PBCH block resources in the target cell.

As one embodiment, the statement "the K1 time unit sets are all associated to the target cell" means that the same quasi-co-location parameters are used for receiving the reference signals transmitted in the K1 time unit sets and one SS/PBCH block resource in the target cell.

As one embodiment, the serving cell is a primary cell (PCell).

As one embodiment, the serving cell is a secondary cell (SCell).

As one embodiment, the serving cell is a special cell (SpCell).

As one embodiment, the serving cell is a primary secondary cell group (SCG) cell.

As one embodiment, the serving cell does not include an extra cell.

As one embodiment, the serving cell does not include an auxiliary cell.

As one embodiment, the serving cell does not include an addition cell.

As one embodiment, the addition cell is a cell used for inter-cell mobility.

As one embodiment, the addition cell is a cell used for inter-cell beam management.

As one embodiment, the addition cell is a cell used for layer 1/layer 2 (L1/L2) inter-cell mobility.

As one embodiment, the addition cell is a cell used for L1/L2 inter-cell beam management.

As one embodiment, when one cell is configured to a terminal through sCellToAddModList IE, the one cell is a serving cell of the terminal; and when one cell is a SpCell of the terminal, the one cell is a serving cell of the terminal.

As one embodiment, when one cell is neither configured to the terminal through the sCellToAddModList IE nor is the SpCell of the terminal, the one cell is not the serving cell of the terminal.

As one embodiment, when one cell is neither configured to the terminal through the sCellToAddModList IE nor is the SpCell of the terminal, the one cell is a cell other than the serving cell of the terminal.

As one embodiment, the target cell is a cell other than the serving cell of the first node.

As one embodiment, the target cell is a non-serving cell of the first node.

As one embodiment, the target cell is one physical cell.

As one embodiment, the target cell is a candidate cell of the first node.

As one embodiment, the target cell is a neighbor cell of the serving cell of the first node.

As one embodiment, the target cell is an additional cell of the first node.

As one embodiment, the target cell is not an additional cell of the first node.

As one embodiment, the target cell is not a serving cell of the first node.

As one embodiment, the target cell is not a PCell of the first node.

As one embodiment, the target cell is not an SpCell of the first node.

As one embodiment, the target cell is not an SCell of the first node.

As one embodiment, the target cell is not a primary SCG cell of the first node.

As one embodiment, the first node does not perform secondary serving cell addition for the target cell.

As one embodiment, the sCellToAddModList most recently received by the first node does not include the target cell.

As one embodiment, both the sCellToAddModList and sCellToAddModListSCG most recently received by the first node do not include the target cell.

As one embodiment, the first node is not allocated a SCellIndex for the target cell.

As one embodiment, the first node is not allocated a ServCellIndex for the target cell.

As one embodiment, no RRC connection is established between the first node and the target cell.

As one embodiment, a C-RNTI of the first node is not allocated by the target cell.

As one embodiment, the SCellIndex is a positive integer not greater than 31.

As one embodiment, the ServCellIndex is a non-negative integer not greater than 31.

As one embodiment, the serving cell and the target cell of the first node are on the same frequency.

As one embodiment, the serving cell and the target cell of the first node are on different frequencies.

As one embodiment, a PCID of the target cell is different from a PCID of the serving cell of the first node.

As one embodiment, the target signaling is used for indicating the target cell.

As one embodiment, the target signaling is used for determining the PCID of the target cell.

As one embodiment, the target signaling is used for indicating the PCID of the target cell.

As one embodiment, the PCID in the present application refers to: Physical Cell IDentifier.

As one embodiment, the PCID in the present application refers to: Physical Cell IDentity.

As one embodiment, the PCID in the present application refers to: Physical-layer Cell IDentity.

As one embodiment, the PCID in the present application refers to: *physCellId.*

### Embodiment 2

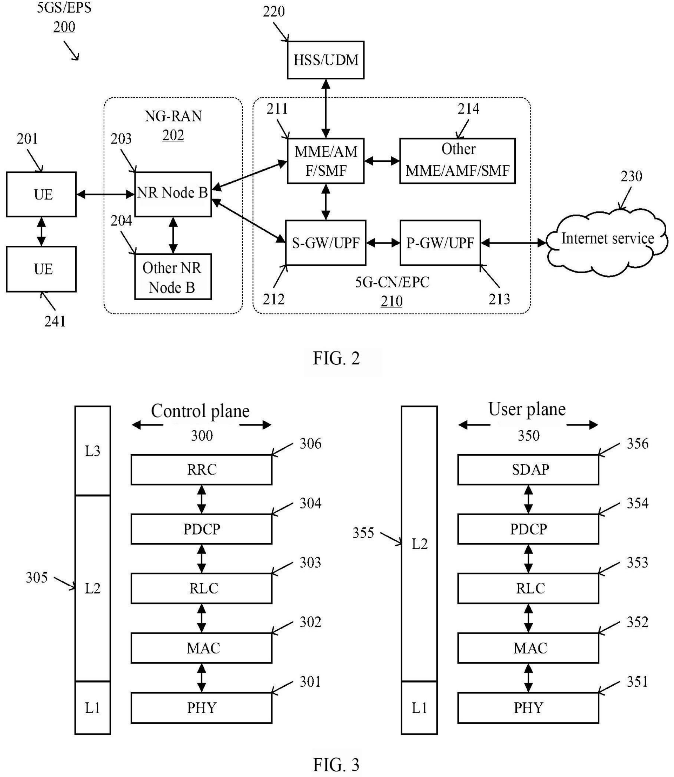

Embodiment 2 illustrates a schematic diagram of a network architecture according to one embodiment of the present application, as shown in FIG. 2.

FIG. 2 illustrates a network architecture of long-term evolution (LTE), long-term evolution advanced (LTE-A) and future 5G systems. The network architecture of the LTE, LTE-A and future 5G systems is called an evolved packet system (EPS). The 5G NR or LTE network architecture may be referred to as a 5G system (5GS)/EPS 200 or some other suitable terminologies. The 5GS/EPS 200 may comprise one or more UE 201, UE 241 performing sidelink communication with the UE 201, a next generation radio access network (NG-RAN) 202, a 5G core network (5G-CN)/evolved packet core (EPC) 210, home subscriber server (HSS)/unified data management (UDM) 220 and an Internet service 230. The 5GS/EPS 200 may be interconnected with other access networks, but these entities/interfaces are not shown for simplicity. As shown in FIG. 2, the 5GS/EPS 200 provides a packet switching service, however, those skilled in the art will readily appreciate that the various concepts presented throughout the present application may be extended to networks providing circuit switching services. The NG-RAN 202 comprises an NR Node B (gNB) 203 and other gNBs 204. The gNB 203 provides user and control plane protocol termination towards the UE 201. The gNB 203 may be connected to the other gNBs 204 via an Xn interface (e.g., backhaul). The gNB 203 may also be referred to as a base station, a base transceiving station, a radio base station, a radio transceiving device, a transceiving device function, a basic service set (BSS), an extended service set (ESS), a transmitter receiver point (TRP), or some other suitable terminologies. The gNB 203 provides an access point to the 5G-CN/EPC 210 for the UE 201. Instances of the UE 201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5G-CN/EPC 210 via an S1/NG interface. The 5G-CN/EPC 210 includes a mobility management entity (MME)/authentication management field (AMF)/session management function (SMF) 211, other MME/AMF/SMFs 214, a service gateway (S-GW)/user plane function (UPF) 212, and a packet data network gateway (P-GW)/UPF 213. The MME/AMF/SMF 211 is a control node that handles signalings between the UE 201 and the 5G-CN/EPC 210. Generally, the MME/AMF/SMF 211 provides bearer and connection management. All user Internet protocol (IP) packets are transmitted through the S-GW/UPF 212, which is itself connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, IP multimedia subsystem (IMS) and packet switching services.

As one embodiment, the first node in the present application comprises the UE 201.

As one embodiment, the second node in the present application comprises the gNB 203.

As one embodiment, the UE 201 supports relay transmission.

As one embodiment, the UE 201 includes a mobile phone.

As one embodiment, the UE 201 is a means of transportation including an automobile.

As one embodiment, the gNB 203 is a Macro Cell base station.

As one embodiment, the gNB 203 is a Micro Cell base station.

As one embodiment, the gNB 203 is a Pico Cell base station.

As one embodiment, the gNB 203 is a Femtocell.

As one embodiment, the gNB 203 is a base station device supporting a large-latency difference.

As one embodiment, the gNB 203 is one flying platform device.

As one embodiment, the gNB 203 is a satellite device.

As one embodiment, the gNB 203 is a test device (such as a transceiving apparatus that simulates some functions of a base station, and a signaling tester).

As one embodiment, the gNB 204 is a Macro Cell base station.

As one embodiment, the gNB 204 is a Micro Cell base station.

As one embodiment, the gNB 204 is a Pico Cell base station.

As one embodiment, the gNB 204 is a Femtocell.

As one embodiment, the gNB 203 is a base station device supporting a large-latency difference.

As one embodiment, the gNB 204 is one flying platform device.

As one embodiment, the gNB 204 is a satellite device.

As one embodiment, the gNB 204 is a test device (such as a transceiving apparatus that simulates some functions of a base station, and a signaling tester).

As one embodiment, a wireless link from the UE 201 to the gNB 203 is an uplink, the uplink being used for executing uplink transmission.

As one embodiment, a wireless link from the gNB 203 to the UE 201 is a downlink, the downlink being used for executing downlink transmission.

As one embodiment, a wireless link between the UE 201 and the gNB 203 comprises a cellular network link.

As one embodiment, the UE 201 and the gNB 203 are connected via a Uu air interface.

As one embodiment, the UE 201 and the gNB 204 are connected via a Uu air interface.

As one embodiment, the gNB 203 and the gNB 204 are connected via an Xn interface.

As one embodiment, a sender of the first signaling comprises the gNB 203.

As one embodiment, a recipient of the first signaling comprises the UE 201.

As one embodiment, a sender of the target signaling includes the gNB 203.

As one embodiment, a sender of the target signaling includes the gNB 204.

As one embodiment, a recipient of the target signaling includes the UE 201.

As one embodiment, a sender of the reference signal in the first time unit set includes the gNB 204.

As one embodiment, a recipient of the reference signal in the first time unit set includes the UE 201.

As one embodiment, a sender of the first information includes the gNB 204.

As one embodiment, a recipient of the first information includes the gNB 203.

As one embodiment, the gNB 203 supports NES.

As one embodiment, the gNB 204 supports NES.

As one embodiment, the gNB 203 supports the sending of discontinuous transmission (DTX).

As one embodiment, the gNB 204 supports the sending of DTX.

As one embodiment, the UE 201 supports reception of discontinuous reception (DRX).

As one embodiment, the UE 201 supports Energy Saving on a terminal side.

As one embodiment, the UE 201 supports Energy Saving on a base station side.

As one embodiment, the UE 201 supports L1/L2-centered cell level mobility.

As one embodiment, the UE 201 supports L1/L2 mobility between the serving cell and the target cell.

As one embodiment, the UE 201 supports beam level mobility between the serving cell and the target cell.

As one embodiment, the UE 201 supports beam management between the serving cell and the target cell.

As one embodiment, the UE 201 supports L1/L2 beam management between the serving cell and the target cell.

As one embodiment, the UE 201 supports inter-cell multi-TRP.

### Embodiment 3

Embodiment 3 illustrates a schematic diagram of an embodiment of a radio protocol architecture for a user plane and a control plane according to one embodiment of the present application, as shown in FIG. 3.

FIG. 3 is a schematic diagram illustrating an embodiment of a radio protocol architecture for a user plane 350 and a control plane 300, and FIG. 3 shows a radio protocol architecture for the control plane 300 between a first communication node device (a road side unit (RSU) in UE or vehicle to everything (V2X), a vehicle-mounted device or a vehicle-mounted communication module) and a second node device (a gNB, an RSU in UE or V2X, a vehicle-mounted device or a vehicle-mounted communication module), or between two pieces of UE using three layers: Layer 1 (L1), Layer 2 (L2) and Layer 3 (L3). L1 is the lowest layer and implements various physical layer (PHY) signal processing functions. L1 will be referred to as PHY 301 herein. L2 305 is above the PHY 301 and is responsible for links between a first node device and a second node device or between two pieces of UE through the PHY 301. L2 305 comprises a MAC sublayer 302, a radio link control (RLC) sublayer 303 and a packet data convergence protocol (PDCP) sublayer 304, which terminate at a second node device. The PDCP sublayer 304 provides multiplexing between different radio bearers and logical channels. The PDCP sublayer 304 also provides security by encrypting data packets and provides handover support for the first communication node device between second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between first communication node devices. The MAC sublayer 302 is also responsible for HARQ operations. An RRC sublayer 306 in L3 in the control plane 300 is responsible for obtaining radio resources (i.e., radio bearers) and configuring lower layers using RRC signaling between the second communication node device and the first communication node device. The radio protocol architecture for the user plane 350 comprises Layer 1 (L1) and Layer 2 (L2). The radio protocol architecture for the first communication node device and the second communication node device in the user plane 350 is substantially the same as the corresponding layers and sublayers in the control plane 300 as for a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce the radio transmission overhead. L2 355 in the user plane 350 also comprises a service data adaptation protocol (SDAP) sublayer 356, which is responsible for mapping between quality of service (QoS) flows and data radio bearers (DRBs) to support the diversity of services. Although not shown, the first communication node device may have several upper layers above L2 355, comprising a network layer (e.g., IP layer) terminated at the P-GW on the network side and an application layer terminated at the other end of the connection (e.g., remote UE, servers, etc.).

As one embodiment, the radio protocol architecture in FIG. 3 is applicable to a first node in the present application.

As one embodiment, the radio protocol architecture in FIG. 3 is applicable to a second node in the present application.

As one embodiment, the first signaling is generated at the RRC sublayer 306 or the MAC sublayer 302.

As one embodiment, the target signaling is generated at the PHY 301 or the PHY 351.

As one embodiment, the target signaling is generated at the MAC sublayer 302.

As one embodiment, the reference signal is generated at the PHY 301 or the PHY 351.

As one embodiment, the reference signal is generated at the MAC sublayer 302.

As one embodiment, the reference signal is generated at the RRC sublayer 306.

As one embodiment, the higher layer in the present application refers to a layer above a physical layer.

As one embodiment, a higher layer in the present application includes a MAC layer.

As one embodiment, a higher layer in the present application includes an RRC layer.

As one embodiment, a protocol layer below the RRC layer in the present application includes a MAC layer.

As one embodiment, a protocol layer below the RRC layer in the present application includes an PHY layer.

### Embodiment 4

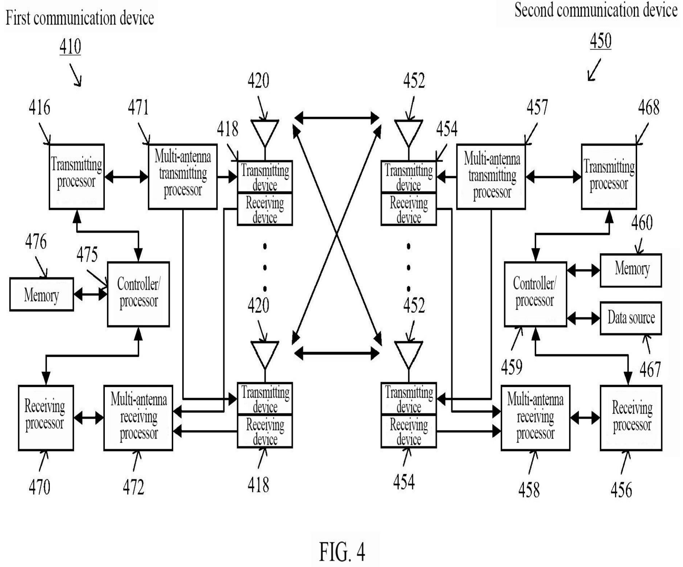

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In transmission from the first communication device 410 to the second communication device 450, at the first communication device 410, upper layer data packets from a core network are provided to a controller/processor 475. The controller/processor 475 implements functionality of L2. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for L1 (i.e., physical layer). The transmitting processor 416 implements coding and interlacing to facilitate forward error correction (FEC) at the second communication device 450, as well as mapping of signal constellations based on various modulation schemes (e.g., binary phase shift keying (BPSK), quadrature phase shift keying (QPSK), M-ary phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes a modulated symbol with a reference signal (e.g., pilot) in a time domain and/or frequency domain, and then uses inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides it to a different antenna 420.

In transmission from the first communication device 410 to the second communication device 450, at the second communication device 450, each receiving device 454 receives a signal through its corresponding antenna 452. Each receiving device 454 recovers information modulated onto a radio frequency carrier and converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 performs a receiving analog precoding/beamforming operation on the baseband multi-carrier symbol stream from the receiving device 454. The receiving processor 456 uses fast Fourier transform (FFT) to convert the baseband multi-carrier symbol stream after the receiving analog precoding/beamforming operation from a time domain to a frequency domain. In the frequency domain, a data signal and a reference signal of a physical layer are demultiplexed by the receiving processor 456, wherein the reference signal will be used for a channel estimation, and the data signal is recovered after multi-antenna detection in the multi-antenna receiving processor 458 into any parallel stream destined for the second communication device 450. Symbols on each parallel stream are demodulated and recovered in the receiving processor 456, and soft decisions are generated. The receiving processor 456 then decodes and deinterlaces the soft decisions to recover upper layer data and control signals transmitted by the first communication device 410 on the physical channel. The upper layer data and control signals are then provided to the controller/processor 459. The controller/processor 459 implements functions of L2. The controller/processor 459 may be associated with a memory 460 storing program codes and data. The memory 460 may be referred to as a computer-readable medium. In a DL, the controller/processor 459 provides demultiplexing between transport and logical channels, packet reassembly, decryption, header decompression, and control signal processing to recover upper layer data packets from the core network. The upper layer data packets are then provided to all protocol layers above L2. Various control signals may also be provided to an L3 for L3 processing. The controller/processor 459 is also responsible for error detection using an Acknowledgement (ACK) and/or Negative Acknowledgement (NACK) protocol to support the HARQ operations.

In transmission from the second communication device 450 to the first communication device 410, at the second communication device 450, the data source 467 is used to provide upper layer data packets to the controller/processor 459. The data source 467 represents all protocol layers above L2. Similar to transmission function at the first communication device 410 described in a DL, the controller/processor 459 implements header compression, encryption, packet segmentation and reordering, and multiplexing between logical and transport channels based on wireless resource allocation of the first communication device 410, and implements L2 functions for the user plane and the control plane. The controller/processor 459 is also responsible for HARQ operations, retransmission of lost packets, and signalings to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 modulates a generated parallel stream into a multi-carrier/single-carrier symbol stream, which is provided to a different antenna 452 via the transmitting device 454 after analog precoding/beamforming operations in the multi-antenna transmitting processor 457. Each transmitting device 454 first converts a baseband symbol stream provided by the multi-antenna transmitting processor 457 into a radio frequency symbol stream, and then provides it to the antenna 452.

In transmission from the second communication device 450 to the first communication device 410, functions at the first communication device 410 are similar to receiving functions at the second communication device 450 described in transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of L1. The controller/processor 475 implements functions of L2. The controller/processor 475 may be associated with the memory 476 storing program codes and data. The memory 476 may be referred to as a computer-readable medium. The controller/processor 475 provides demultiplexing between transport and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using an ACK and/or NACK protocols to support the HARQ operations.

As one embodiment, the second communication device 450 includes: at least one processor and at least one memory, the at least one memory including a computer program code; and the at least one memory and the computer program code are configured to be used together with the at least one processor. The second communication device 450 at least receives first signaling, the first signaling being used for configuring K1 time unit sets; receives target signaling, the target signaling being used for determining a first time unit set from the K1 time unit sets; and performs wireless resource management measurement on the basis of a reference signal in the first time unit set, wherein K1 is a positive integer greater than 1, the K1 time unit sets are all associated to a target cell, the target cell is a cell other than a serving cell of the second communication device 450; and the target signaling is MAC layer signaling or physical layer signaling.

As one embodiment, the second communication device 450 includes: a memory storing a computer-readable instruction program, wherein the computer-readable instruction program generates actions when executed by at least one processor, and the actions include: receiving first signaling; and receiving target signaling; and performing wireless resource management measurement on the basis of a reference signal in the first time unit set.

As one embodiment, the first communication device 410 includes: at least one processor and at least one memory, the at least one memory including a computer program code; and the at least one memory and the computer program code are configured to be used together with the at least one processor. The first communication device 410 at least sends first signaling, the first signaling being used for configuring K1 time unit sets; sends target signaling, the target signaling being used for determining a first time unit set from the K1 time unit sets, a recipient of the target signaling includes the second communications device 450, and the second communications device 450 performs wireless resource management measurement on the basis of a reference signal in the first time unit set; K1 is a positive integer greater than 1, the K1 time unit sets are all associated to a target cell, the target cell is a cell other than a serving cell of the second communication device 450; and the target signaling is MAC layer signaling or physical layer signaling.

As one embodiment, the first communication device 410 includes: a memory storing a computer-readable instruction program, wherein the computer-readable instruction program generates actions when executed by at least one processor, and the actions include: sending first signaling; and sending target signaling.

As one embodiment, the first node in the present application comprises the second communication device 450.

As one embodiment, the second node in the present application comprises the first communication device 410.

As one embodiment, at least one of {the antenna 420, the transmitting device 418, the transmitting processor 416, the multi-antenna transmitting processor 471, the controller/processor 475, and the memory 476} is used for sending the first signaling; and at least one of {the antenna 452, the receiving device 454, the receiving processor 456, the multi-antenna receiving processor 458, the controller/processor 459, the memory 460, and the data source 467} is used for receiving the first signaling.

As one embodiment, at least one of {the antenna 420, the transmitting device 418, the transmitting processor 416, the multi-antenna transmitting processor 471, the controller/processor 475, and the memory 476} is used for sending the target signaling; and at least one of {the antenna 452, the receiving device 454, the receiving processor 456, the multi-antenna receiving processor 458, the controller/processor 459, the memory 460, and the data source 467} is used for receiving the target signaling.

As one embodiment, at least one of {the antenna 452, the receiving device 454, the receiving processor 456, the multi-antenna receiving processor 458, the controller/processor 459, the memory 460, and the data source 467} is used for performing wireless resource management measurement on the basis of the reference signal in the first time unit set.

### Embodiment 5

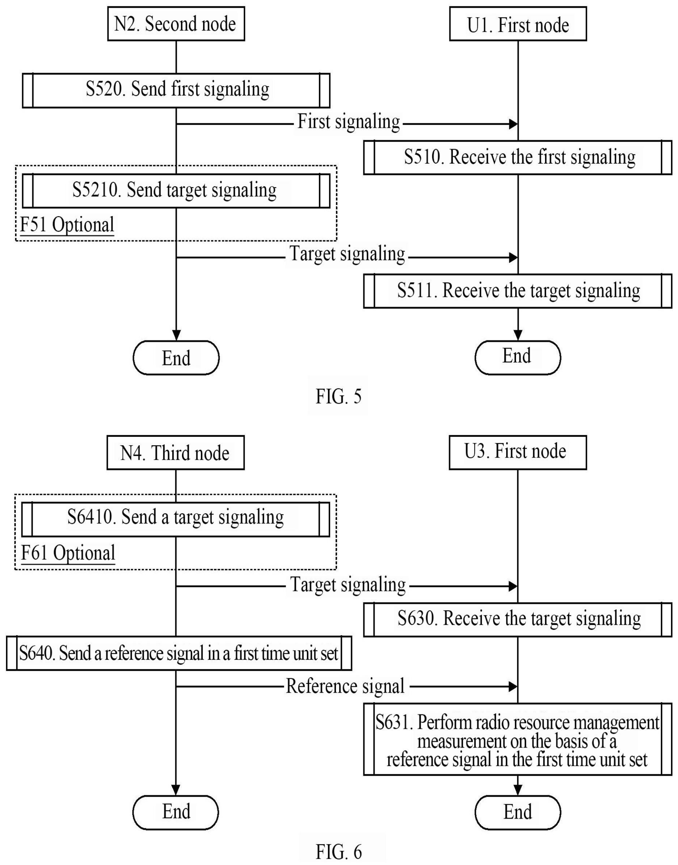

Embodiment 5 illustrates a first flowchart of transmission between a first node and a second node according to one embodiment of the present application. In FIG. 5, a first node U1 communicates with a second node N2 via a wireless link. In FIG. 5, steps in block F51 are optional. It should be particularly noted that the order in this embodiment does not limit the signal transmission order and implementation order in the present application. In the absence of conflicts, the embodiment, sub-embodiment and subsidiary embodiment in Embodiment 5 can be applied to Embodiment 6 and Embodiment 7; and on the contrary, in the absence of conflicts, any embodiment, sub-embodiment and subsidiary embodiment in Embodiment 6 and Embodiment 7 can be applied to Embodiment 5.

For **the first node U1,** in step S510, first signaling is received; in step S511, target signaling is received.

For **the second node N2,** in step S520, first signaling is sent; and in step S5210, target signaling is sent.

In Embodiment 5, the first signaling is used for configuring K1 time unit sets; the target signaling is used by the first node U1 to determine a first time unit set from the K1 time unit sets; K1 is a positive integer greater than 1, the K1 time unit sets are all associated to a target cell, the target cell is a cell other than a serving cell of the first node U1; and the target signaling is MAC layer signaling or physical layer signaling.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the air interface between the second node N2 and the first node U1 includes one or more of a wireless interface between TRP and user equipment, a wireless interface between CU and user equipment, or a wireless interface between DU and user equipment.

As one embodiment, the second node N2 includes a serving cell maintenance base station of the first node U1.

As one embodiment, the second node N2 is a serving cell maintenance base station of the first node U1.

As one embodiment, the second node N2 includes a maintenance base station of the target cell.

As one embodiment, the second node N2 is a maintenance base station of the target cell.

As one embodiment, the block 51 in FIG. 5 exists; and the method applied to the second node N2 includes: sending target signaling.

As one sub-embodiment of the above embodiment, the target signaling is sent in the serving cell of the first node U1.

As one embodiment, the block 51 in FIG. 5 exists; and the method applied to the first node in the present application includes: receiving target signaling.

As one sub-embodiment of the above embodiment, the target signaling is sent in the serving cell of the first node in the present application.

As one embodiment, the block 51 in FIG. 5 does not exist.

As one embodiment, the first signaling is transmitted on a downlink physical layer data channel (i.e., a downlink channel that can be used for bearing physical layer data).

As one embodiment, a physical layer channel occupied by the first signaling includes a physical downlink shared channel (PDSCH).

As one embodiment, the target signaling is transmitted on a downlink physical layer control channel (i.e., a downlink channel that can only be used for bearing physical layer signaling).

As one embodiment, a physical layer channel occupied by the target signaling includes a physical downlink control channel (PDCCH).

As one embodiment, a physical layer channel occupied by the target signaling includes a physical sidelink control channel (PSCCH).

As one embodiment, a physical layer channel occupied by the target signaling includes a physical HARQ indicator channel (PHICH).

As one embodiment, a physical layer channel occupied by the target signaling includes a physical control format indicator channel (PCFICH).

### Embodiment 6

Embodiment 6 illustrates a flowchart of transmission between a first node and a third node according to one embodiment of the present application. In FIG. 6, a first node U3 communicates with a second node N4 via a wireless link. In FIG. 6, steps in block F61 are optional. It should be particularly noted that the order in this embodiment does not limit the signal transmission order and implementation order in the present application. In the absence of conflicts, the embodiment, sub-embodiment and subsidiary embodiment in Embodiment 6 can be applied to Embodiment 5 and Embodiment 7; and on the contrary, in the absence of conflicts, any embodiment, sub-embodiment and subsidiary embodiment in Embodiment 5 and Embodiment 7 can be applied to Embodiment 6.

For **the first node U3,** in step S630, target signaling is received; and in step S631, wireless resource management measurement is performed on the basis of a reference signal in the first time unit set.

For **the third node N4,** in step S6410, target signaling is sent; and in step S640, the reference signal is sent in the first time unit set.

In Embodiment 6, the first signaling is used for configuring K1 time unit sets; the target signaling is used by the first node U3 to determine a first time unit set from the K1 time unit sets; K1 is a positive integer greater than 1, the K1 time unit sets are all associated to a target cell, the target cell is a cell other than a serving cell of the first node U3; and the target signaling is MAC layer signaling or physical layer signaling.

As one embodiment, the first node U3 is the first node in the present application.

As one embodiment, the third node N4 is the second node in the present application.

As one embodiment, the third node N4 is one node other than the second node in the present application.

As one embodiment, an air interface between the third node N4 and the first node U3 includes a wireless interface between a base station device and user equipment.

As one embodiment, an air interface between the third node N4 and the first node U3 includes a wireless interface between a relay node device and user equipment.

As one embodiment, an air interface between the third node N4 and the first node U3 includes a wireless interface between user equipment and user equipment.

As one embodiment, an air interface between the third node N4 and the first node U3 includes one or more of a wireless interface between TRP and user equipment, a wireless interface between CU and user equipment, or a wireless interface between DU and user equipment.

As one embodiment, the third node N4 includes a serving cell maintenance base station of the first node U3.

As one embodiment, the third node N4 does not include a serving cell maintenance base station of the first node U3.

As one embodiment, the third node N4 includes a maintenance base station of the target cell.

As one embodiment, the third node N4 is a maintenance base station of the target cell.

As one embodiment, the target cell is one cell other than the serving cell of the first node U3, and the third node N4 is not the maintenance base station of the serving cell of the first node U1.

As one embodiment, the third node N4 and the second node N2 in Embodiment 5 of the present application include two different base stations, respectively.

As one embodiment, the third node N4 and the second node N2 in Embodiment 5 of the present application include two different TRPs, respectively.

As one embodiment, the third node N4 and the second node N2 in Embodiment 5 of the present application are respectively two different TRPs in the same base station.

As one embodiment, step S6410 in the block 61 in FIG. 6 exists; and the method applied to the third node N4 includes: sending target signaling.

As one sub-embodiment of the above embodiment, the target signaling is sent in the target cell.

As one embodiment, when the step S5210 in Embodiment 5 of the present application exists, step S6410 in the block 61 in FIG. 6 does not exist, and the method applied to the first node in the present application includes: receiving target signaling.

As one sub-embodiment of the above embodiment, the target signaling is received in the serving cell of the first node in the present application.

As one embodiment, when step S6410 in the block 61 in FIG. 6 exists, the step S5210 in Embodiment 5 of the present application does not exist, and the method applied to the first node in the present application includes: receiving target signaling.

As one sub-embodiment of the above embodiment, the target signaling is received in the target cell.

As one embodiment, the step S511 in Embodiment 5 of the present application is equivalent to step S630.

As one embodiment, the step S512 "performing wireless resource management measurement on the basis of the reference signal in the first time unit set" includes: receiving the reference signal in the first time unit set.

As one embodiment, the step S512 "performing wireless resource management measurement on the basis of the reference signal in the first time unit set" includes: receiving the reference signal in the first time unit set.

As one embodiment, the step S512 "performing wireless resource management measurement on the basis of the reference signal in the first time unit set" includes: receiving the reference signal in the first time unit set, and determining RSRP of the reference signal.

As one embodiment, the step S512 "performing wireless resource management measurement on the basis of the reference signal in the first time unit set" includes: receiving the reference signal in the first time unit set, and determining RSRQ of the reference signal.

As one embodiment, the step S512 "performing wireless resource management measurement on the basis of the reference signal in the first time unit set" includes: receiving the reference signal in the first time unit set, and determining RSSI of the reference signal.

As one embodiment, the step S512 "performing wireless resource management measurement on the basis of the reference signal in the first time unit set" includes: receiving the reference signal in the first time unit set, and determining SINR of the reference signal.

As one embodiment, the reference signal in the first time unit set is transmitted in the target cell.

As one embodiment, the reference signal in the first time unit set is sent in the target cell.

As one embodiment, the reference signal in the first time unit set is received in the target cell.

As one embodiment, a search space set configured to the target signaling is known to the first node.

As one embodiment, a control resource set configured to the target signaling is known to the first node.

### Embodiment 7

Embodiment 7 illustrates a flowchart of transmission between a second node and a third node according to one embodiment of the present application. It should be particularly noted that the order in this embodiment does not limit the signal transmission order and implementation order in the present application. In the absence of conflicts, the embodiment, sub-embodiment and subsidiary embodiment in Embodiment 7 can be applied to Embodiment 5 and Embodiment 6; and on the contrary, in the absence of conflicts, any embodiment, sub-embodiment and subsidiary embodiment in Embodiment 5 and Embodiment 6 can be applied to Embodiment 7.

For **the second node N5,** in step S750, first information is received.

For **the third node N6,** in step S760, first information is sent.

In Embodiment 7, the first information is used for triggering transmission of the target signaling.

As one embodiment, the second node N5 is the second node in the present application.

As one embodiment, the third node N6 is one node other than the second node in the present application.

As one embodiment, an interface between the third node N6 and the second node N5 includes an interface between a base station and a base station.

As one embodiment, an interface between the third node N6 and the second node N5 includes an Xn interface.

As one embodiment, the third node N6 communicates with the second node N5 via an Xn interface.

As one embodiment, the second node N5 includes a serving cell maintenance base station of the first node U1.

As one embodiment, the third node N6 does not include a serving cell maintenance base station of the first node U1.

As one embodiment, the second node N5 is a serving cell maintenance base station of the first node U1.

As one embodiment, the third node N6 is not a serving cell maintenance base station of the first node U1.

As one embodiment, the third node N6 includes a maintenance base station of the target cell.

As one embodiment, the second node N5 does not include a maintenance base station of the target cell.

As one embodiment, the third node N6 is a maintenance base station of the target cell.

As one embodiment, the second node N5 is not a maintenance base station of the target cell.

As one embodiment, the third node N6 and the second node N5 each include two different base stations.

As one embodiment, the third node N6 and the second node N5 each include two different TRPs.

As one embodiment, the third node N6 and the second node N5 each include two different TRPs in different base stations.

As one embodiment, the serving cell of the first node in the present application receives the first information from the target cell via the Xn interface.

As one embodiment, the second node N5 receives the first information from the third node N6 via the Xn interface.

As one embodiment, a message bearing the first information includes HANDOVER REQUEST ACKNOWLEDGE.

As one embodiment, the name of the Xn message bearing the first information includes HANDOVER.

As one embodiment, the name of the Xn message bearing the first information includes MOBILITY.

As one embodiment, the name of the Xn message bearing the first information includes FAST.

As one embodiment, the first information includes new configuration information of the first node.

As one sub-embodiment of the above embodiment, the configuration information is used for handover of the first node in the present application to the target cell.

As one embodiment, the first information includes PCID of the target cell.

As one embodiment, the first information includes all or part of information required to access the target cell.

As one embodiment, the first information includes whether the target cell accepts dual active protocol stack (DAPS) handover.

As one embodiment, the first information is used for triggering the sending of the target signaling.

As one embodiment, the first information is used for triggering the reception of the target signaling.

As one embodiment, the first information is used for determining at least one of time domain resources or frequency domain resources occupied by the target signaling.

As one embodiment, the first information is used for determining a control resource set (CORESET) occupied by the target signaling.

As one embodiment, the first information is used for determining a search space set occupied by the target signaling.

As one embodiment, the first information is used for indicating a time interval between downlink timing of the target cell and downlink timing of the serving cell.

As one embodiment, the first information carries information of the K1 time unit sets.

As one embodiment, the first information is used for determining the first time unit set.

As one embodiment, the first information is used for indicating that the target cell enters into a first state.

As one embodiment, the target signaling is used for indicating that the target cell enters into a first state.

As one embodiment, the first state is an inactive state.

As one embodiment, the first state comprises sending the inactive state.

As one embodiment, the first state includes a DTX state.

As one embodiment, the first state comprises a network energy-saving state.

As one embodiment, a characteristic of the first state includes that the target cell sends SSB.

As one embodiment, a characteristic of the first state includes that the target cell sends CSI-RS.

As one embodiment, a characteristic of the first state includes that the target cell stops sending paging.

As one embodiment, a characteristic of the first state includes that the target cell stops sending part of a system information block (SIB).

As one embodiment, a characteristic of the first state includes that the target cell sends a reference signal in the first time unit set.

As one embodiment, a characteristic of the first state includes that the target cell stops dynamic scheduling-based data transmission.

As one embodiment, the dynamic scheduling-based data transmission is UE-dedicated.

As one embodiment, the dynamic scheduling-based data transmission comprises: dynamic scheduling-based downlink transmission.

As one embodiment, the dynamic scheduling-based data transmission comprises: dynamic scheduling-based uplink reception.

As one embodiment, the dynamic scheduling-based data transmission comprises: dynamic scheduling-based downlink transmission and dynamic scheduling-based uplink reception.

As one embodiment, the step S750 is before the step S5210 in Embodiment 5 of the present application.

As one embodiment, the step S750 is before the step S6410 in Embodiment 6 of the present application.

### Embodiment 8

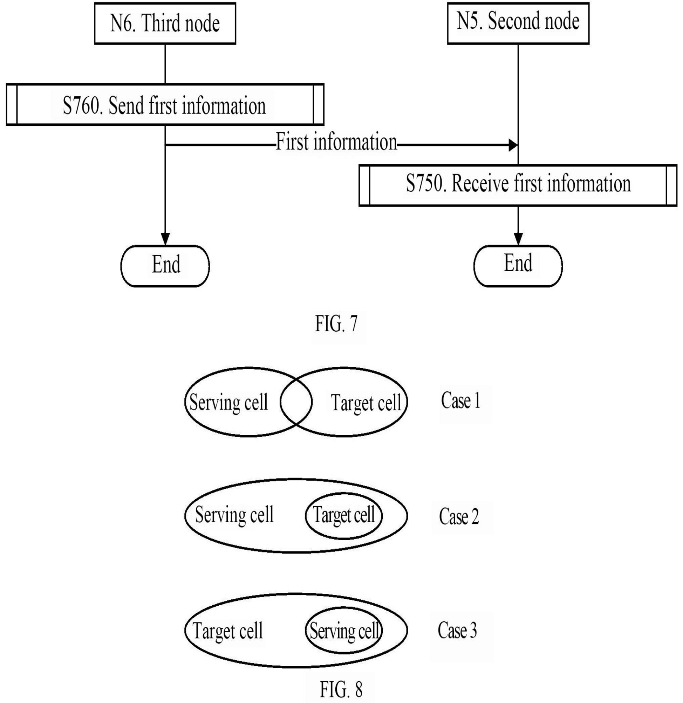

Embodiment 8 illustrates a schematic diagram of a positional relationship between a serving cell and a target cell of a first node according to one embodiment of the present application, as shown in FIG. 8. In FIG. 8, the target cell is a cell other than the serving cell of the first node. In case 1, the serving cell and the target cell of the first node are adjacent, and a coverage range of one cell does not completely include a coverage range of the other cell. In case 2, a coverage range of the serving cell of the first node includes a coverage range of the target cell. In case 3, a coverage range of the target cell includes a coverage range of the serving cell of the first node.

As one embodiment, the target cell is one cell other than the serving cell of the first node.

As one embodiment, the target cell is a neighbor cell of the serving cell of the first node.

As one embodiment, the statement "the target cell is a neighbor cell of the serving cell of the first node" means that the coverage range of the serving cell of the first node includes the coverage range of the target cell, wherein the serving cell of the first node is a macro cell, and the target cell is a micro cell.

As one embodiment, the statement "the target cell is a neighbor cell of the serving cell of the first node" means that the coverage range of the target cell includes the coverage range of the serving cell of the first node, wherein the target cell is a macro cell, and the serving cell of the first node is a micro cell.

It should be noted that the macro cell and micro cell in the above two embodiments are primarily used for distinguishing between the size of the coverage range, wherein the coverage range of the macro cell includes the coverage range of the micro cell. That is, when the coverage range of the serving cell of the first node includes the coverage range of the target cell, the serving cell of the first node is a macro cell, and the target cell is a micro cell. Conversely, when the coverage range of the target cell includes the coverage range of the serving cell of the first node, the target cell is a macro cell, and the serving cell of the first node is a micro cell.

### Embodiment 9

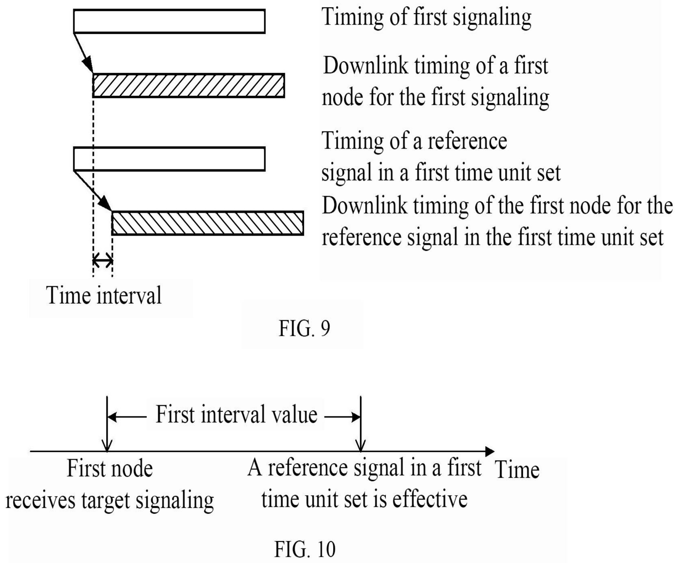

Embodiment 9 illustrates a schematic diagram of target signaling being used for determining a time interval according to one embodiment of the present application, as shown in FIG. 9. In FIG. 9, the target signaling is used for determining a time interval between downlink timing of the first signaling and downlink timing of the reference signal transmitted in the first time unit set.

As one embodiment, the target signaling is used for determining the downlink timing of the target cell.

As one embodiment, the target signaling is used for determining time domain resources occupied by the reference signal in the first time unit set.

As one embodiment, the target signaling is used for downlink synchronization of the target cell.

As one embodiment, the target signaling is used for determining a time interval between downlink timing of the first signaling and downlink timing of the reference signal transmitted in the first time unit set.

As one embodiment, the target signaling is used for indicating a time interval between downlink timing of the first signaling and downlink timing of the reference signal transmitted in the first time unit set.

As one embodiment, the target signaling is used for determining a time interval between downlink timing of the serving cell of the first node and downlink timing of the target cell.

As one embodiment, the time interval includes a time interval between downlink timing of the serving cell of the first node and downlink timing of the target cell.

As one embodiment, the time interval includes a time interval between SFN of the serving cell of the first node and SFN of the target cell.

As one embodiment, the time interval includes a time difference between a transmission delay from the serving cell of the first node to the first node and a transmission delay from the target cell to the first node.

As one embodiment, a unit of the time interval is millisecond.

As one embodiment, a unit of the time interval is microsecond.

As one embodiment, a unit of the time interval is the number of symbols.

As one embodiment, a unit of the time interval is the number of sampling points.

As one embodiment, a unit of the time interval is the number of slots.

### Embodiment 10

Embodiment 10 illustrates a schematic diagram of target signaling being used for determining an effective moment of a reference signal in a first time unit set according to one embodiment of the present application, as shown in FIG. 10. In FIG. 10, the reference signal in the first time unit set becomes effective after at least a first interval value after a first node receives the target signaling.

As one embodiment, the target signaling is used for determining that the effective moment of the reference signal in the first time unit set is Q1 symbols after the first node receives the target signaling, where Q1 is a positive integer greater than 1.

As one sub-embodiment of this embodiment, a value of Q1 is fixed, or a value of Q1 is configured through RRC signaling.

As one sub-embodiment of this embodiment, a value of Q1 is indicated by the target signaling.

As one embodiment, the target signaling is used for determining that the effective moment of the reference signal in the first time unit set is Q2 slots after the first node receives the target signaling, where Q2 is a positive integer greater than 1.

As one sub-embodiment of this embodiment, a value of Q2 is fixed, or a value of Q2 is configured through RRC signaling.

As one sub-embodiment of this embodiment, a value of Q2 is indicated by the target signaling.

As one embodiment, the reference signal in the first time unit set becomes effective after at least a first interval value after a first node receives the target signaling.

As one embodiment, the target signaling implicitly indicates the effective moment of the reference signal in the first time unit set.

As one embodiment, in response to receiving the target signaling, the reference signal in the first time unit set becomes effective from a first moment.

As one embodiment, the first moment is a moment when the reference signal in the first time unit set becomes effective.

As one embodiment, the first moment is a moment that is at least a first interval value after the last symbol of a PDCCH or PDSCH occupied by the target signaling.

As one sub-embodiment of the above embodiment, the first interval value includes Q1 symbols, where Q1 is a positive integer greater than 1.

As one sub-embodiment of the above embodiment, the one moment refers to one symbol.

As one embodiment, the first moment refers to a first slot that is at least a first interval value after the last one symbol of a PDCCH or PDSCH occupied by the target signaling.

As one embodiment, the first moment refers to a first slot that is at least a first interval value after a slot where a PDCCH or PDSCH occupied by the target signaling is located in a time domain.

As one sub-embodiment of the above two embodiments, the first interval value includes Q1 symbols, where Q1 is a positive integer greater than 1.

As one sub-embodiment of the above two embodiments, the first interval value includes Q2 slots, where Q2 is a positive integer greater than 1.

As one embodiment, "after one symbol" means being later in time than the one symbol.

As one embodiment, "after one symbol" means being no earlier in time than the one symbol.

As one embodiment, a unit of the first interval value is slot.

As one embodiment, a unit of the first interval value is symbol.

As one embodiment, a unit of the first interval value is millisecond (ms).

As one embodiment, the first interval value is a positive integer.

As one embodiment, the first interval value is a positive real number.

As one embodiment, the first interval value is fixed.

As one embodiment, the first interval value is configured by a higher layer parameter.

### Embodiment 11

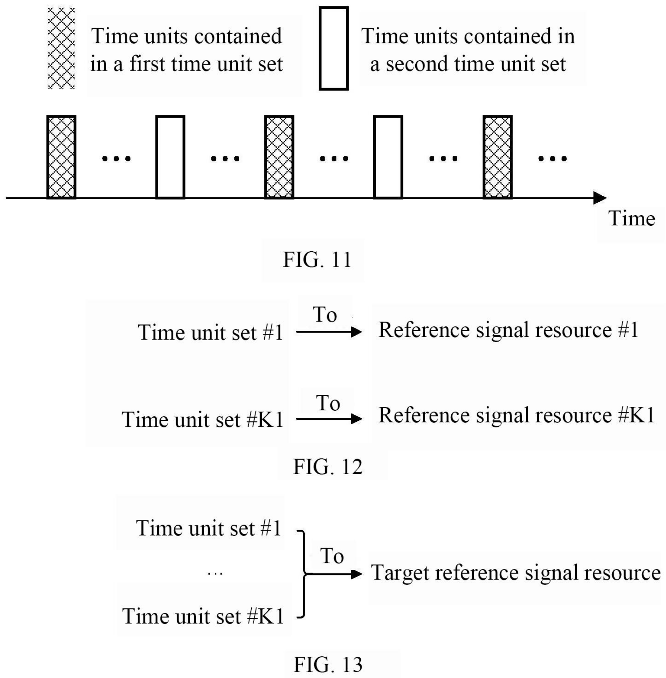

Embodiment 11 illustrates a schematic diagram of a first time unit set and a second time unit set according to one embodiment of the present application, as shown in FIG. 11. In FIG. 11, the second time unit set is a subset of the first time unit set.

As one embodiment, the K1 time unit sets include at least the first time unit set and the second time unit set, and the first time unit set is a subset of the second time unit set.

As one embodiment, any time unit included in the first time unit set is a time unit in the second time unit set, and at least one time unit in the second time unit set does not belong to the first time unit set.

As one embodiment, the first time unit set is a proper subset of the second time unit set.

As one embodiment, the target signaling is used for indicating the first time unit set from the second time unit set.

As one embodiment, the target signaling is used for determining the first time unit set from the second time unit set.

As one embodiment, the target signaling is used for determining the first time unit set from the first time unit set and the second time unit set.

As one embodiment, the target signaling is used for indicating the first time unit set from the first time unit set and the second time unit set.

As one embodiment, the target signaling is used for explicitly indicating the first time unit set.

As one embodiment, the target signaling is used for implicitly indicating the first time unit set.

As one embodiment, the target signaling is used for indicating that the target cell enters into the first state in the present application, and the target cell entering into the first state in the present application is used for indicating the first time unit set.

As one embodiment, the target signaling is used for determining that the target cell enters into the first state in the present application, and the target cell entering into the first state in the present application is used for determining the first time unit set.

As one embodiment, the explicit indication includes value indication through a bit field.

As one embodiment, the implicit indication includes indirect indication by indicating other IEs including all or part of the configuration information of the reference signal.

### Embodiment 12

Embodiment 12 illustrates a schematic diagram of a relationship between a time unit set and a reference signal resource according to one embodiment of the present application, as shown in FIG. 12. In FIG. 12, the K1 time unit sets are respectively configured to K1 reference signal resources, the K1 time unit sets are respectively a time unit set #1,..., a time unit set #K1, and the K1 reference signal resources are respectively a reference signal resource #1,..., a reference signal resource #K1.

As one embodiment, any one of the K1 reference signal resources occupies at least one resource element (RE).

Typically, one RE occupies one symbol in a time domain and one subcarrier in a frequency domain.

As one embodiment, any one of the K1 reference signal resources includes at least one sub-band in the frequency domain.

As one embodiment, any one of the K1 reference signal resources includes at least one resource block (RB) in the frequency domain.

As one embodiment, any one of the K1 reference signal resources includes at least one subcarrier in one RB in the frequency domain.

As one embodiment, the RB in the present application includes a physical resource block (PRB).

As one embodiment, the RB in the present application refers to a PRB.

As one embodiment, the RB in the present application includes 12 consecutive subcarriers in the frequency domain.

As one embodiment, time domain resources occupied by the K1 reference signal resources are respectively K1 time unit sets.

As one embodiment, any one of the K1 reference signal resources includes a group of downlink PRBs.

As one embodiment, any one of the K1 reference signal resources is a CSI-RS resource.

As one embodiment, any one of the K1 reference signal resources is an SS/PBCH block resource.

As one embodiment, any one of the K1 reference signal resources is one of a CSI-RS resource or an SS/PBCH block resource.

As one embodiment, the K1 reference signal resources are respectively K1 CSI-RS resources.

As one embodiment, the K1 reference signal resources are respectively K1 SS/PBCH resources.

As one embodiment, the K1 reference signal resources correspond to K1 SSB-indexes respectively.

As one embodiment, the K1 reference signal resources correspond to K1 NZP-CSI-RS-ResourceIds respectively.

As one embodiment, the K1 reference signal resources correspond to K1 Identities respectively.

As one embodiment, the K1 reference signal resources correspond to K1 CSI-IM-ResourceIds respectively.

As one embodiment, the K1 reference signal resources correspond to K1 CSI-SSB-ResourceIds respectively.

As one embodiment, the K1 is equal to 2, the K1 time unit sets are the first time unit set and the second time unit set respectively, and the K1 reference signal resources are the first reference signal resource and the second reference signal resource respectively; and the first time unit set and the second time unit set are respectively configured to the first reference signal resource and the second reference signal resource.

As one embodiment, K1 is greater than 2.

### Embodiment 13

Embodiment 13 illustrates a schematic diagram of a relationship between a time unit set and a reference signal resource according to one embodiment of the present application, as shown in FIG. 13. In FIG. 13, the K1 time unit sets are respectively configured to K1 reference signal resources, the K1 time unit sets are respectively a time unit set #1,..., a time unit set #K1, and the K1 reference signal resources are respectively a reference signal resource #1,..., a reference signal resource #K1.

As one embodiment, the target reference signal resource occupies at least one RE.

As one embodiment, the target reference signal resource includes at least one sub-band in the frequency domain.

As one embodiment, the target reference signal resource includes at least one RB in the frequency domain.

As one embodiment, the target reference signal includes at least one subcarrier in one RB in the frequency domain.

As one embodiment, the RB in the present application includes a PRB.

As one embodiment, the RB in the present application refers to a PRB.

As one embodiment, the RB in the present application includes 12 consecutive subcarriers in the frequency domain.

As one embodiment, the target reference signal resource includes a group of downlink PRBs.

As one embodiment, the target reference signal resource is periodic. As one embodiment, the target reference signal resource is a CSI-RS resource.

As one embodiment, the target reference signal resource is an SS/PBCH block resource.

As one embodiment, the target reference signal resource includes a PSS resource.

As one embodiment, the target reference signal resource comprises an SSS resource.

As one embodiment, the target reference signal resource comprises a PBCH resource.

As one embodiment, the target reference signal resource includes a synchronization signal block (SSB) resource.

As one embodiment, the target reference signal resource includes a synchronization signal block (SSB) resource.

Typically, the reception occasions of the PBCH, PSS, and SSS are in consecutive symbols and form an SS/PBCH block.

As one embodiment, the target reference signal resource is one of a CSI-RS resource and an SS/PBCH block resource.

As one embodiment, the target reference signal resource corresponds to one SSB-index.

As one embodiment, the target reference signal resource corresponds to one NZP-CSI-RS-ResourceId.

As one embodiment, the target reference signal resource corresponds to one Identity.

As one embodiment, the target reference signal resource corresponds to one CSI-IM-ResourceId.

As one embodiment, the target reference signal resource corresponds to one CSI-SSB-ResourceId.

As one embodiment, K1 is equal to 2, the K1 time unit sets are respectively the first time unit set and the second time unit set, and both the first time unit set and the second time unit set are configured to the first reference signal resource.

As one sub-embodiment of this embodiment, the first time unit set and the second time unit set correspond to different configuration periods respectively.

As one sub-embodiment of this embodiment, the configuration period of the first time unit set is a positive integer multiple of the configuration period of the second time unit set.

### Embodiment 14

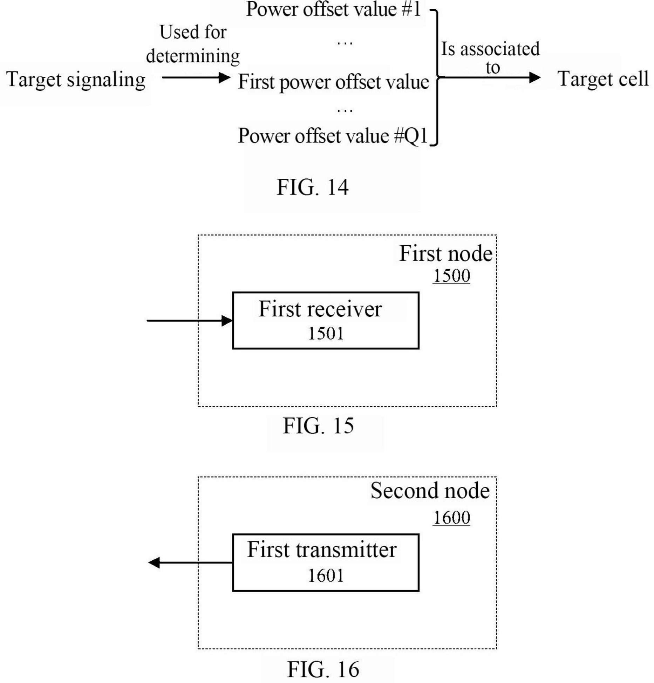

Embodiment 14 illustrates a schematic diagram of target signaling being used for determining a first power offset value according to one embodiment of the present application, as shown in FIG. 14. In FIG. 14, the target signaling is used for determining a first power offset value from a plurality of power offset values, the first power offset value is used for mobility management for the target cell, and the plurality of power offset values are associated to the target cell.

As one embodiment, the plurality of power offset values include the first power offset value and the second power offset value, the first power offset value is associated to the first time unit set, and the second power offset value is associated to (K1-1) time unit sets in the K1 time unit sets except the first time unit set.

As one sub-embodiment of this embodiment, the first power offset value is used for a measurement result of a reference signal received in the first time unit set; and the second power offset value is used for measurement results of reference signals received in the (K1-1) time unit sets.

As one sub-embodiment of this embodiment, when the target signaling is used for determining the first time unit set, the first power offset value and the measurement result of the reference signal received in the first time unit set are jointly used for wireless resource management measurement; otherwise, the second power offset value and the measurement results of the reference signals received in the (K1-1) time unit sets are jointly used for the wireless resource management measurement.

As one auxiliary embodiment of the above two sub-embodiments, the measurement result includes at least one of RSRP, RSRQ, or RSSI.

As one auxiliary embodiment of the above two sub-embodiments, the measurement result includes SINR.

As one auxiliary embodiment of the above two sub-embodiments, the measurement result includes a signal to noise ratio (SNR).

As one embodiment, the plurality of power offset values include K1 power offset values, and the K1 power offset values are respectively associated to the K1 time unit sets.

As one sub-embodiment of this embodiment, the first power offset value is associated to the first time unit set.

As one sub-embodiment of this embodiment, a given power offset value is any one of the K1 power offset values, and the given power offset value is associated to a given time unit set in the K1 time unit sets.

As one auxiliary embodiment of this sub-embodiment, the given power offset value is used for the measurement result of the reference signal received in the given time unit set.

As one auxiliary embodiment of this sub-embodiment, the given power offset value and the measurement result of reference signal received in the given time unit set are jointly used for wireless resource management measurement.

As one auxiliary embodiment of this sub-embodiment, the measurement result includes at least one of RSRP, RSRQ, or RSSI.

As one auxiliary embodiment of this sub-embodiment, the measurement result includes SINR.

As one auxiliary embodiment of this sub-embodiment, the measurement result includes SNR.

As one embodiment, when the K1 time unit sets are all associated to the first reference signal resource, the K1 power offset values are all associated to the first reference signal resource.

As one embodiment, when the K1 time unit sets are respectively associated to the K1 reference signal resources, the K1 power offset values are respectively associated to the K1 reference signal resources.

As one embodiment, the given power offset value is any one of the K1 power offset values. When the given power offset value is used for wireless resource management measurement, the given power offset value is used for determining Ofn in TS 38.331.

As one embodiment, the given power offset value is any one of the K1 power offset values. When the given power offset value is used for wireless resource management measurement, the given power offset value is used for determining Ocn in TS 38.331.

As one embodiment, a unit of any one of the plurality of power offset values is deciBel (dB).

As one embodiment, a unit of at least one of the plurality of power offset values is dB.

As one embodiment, a unit of the first power offset value is dB.

### Embodiment 15

Embodiment 15 illustrates a structural block diagram of a processing apparatus used in a first node according to one embodiment of the present application, as shown in FIG. 15. In FIG. 15, a processing apparatus 1500 in the first node includes a first receiver 1501.

In Embodiment 15, the first receiver 1501 receives first signaling, the first signaling being used for configuring K1 time unit sets; receives target signaling, the target signaling being used for determining a first time unit set from the K1 time unit sets; and performs wireless resource management measurement on the basis of a reference signal in the first time unit set, wherein K1 is a positive integer greater than 1, the K1 time unit sets are all associated to a target cell, the target cell is a cell other than a serving cell of the first node, and the target signaling is MAC layer signaling or physical layer signaling.

As one embodiment, the target signaling is used for determining a time interval between downlink timing of the first signaling and downlink timing of the reference signal transmitted in the first time unit set.

As one embodiment, the target signaling is used for determining an effective moment of the reference signal in the first time unit set.

As one embodiment, the target signaling is used for determining a first power offset value from a plurality of power offset values, the first power offset value is used for mobility management for the target cell, and the plurality of power offset values are associated to the target cell.

As one embodiment, the K1 time unit sets include at least the first time unit set and the second time unit set, and the first time unit set is a subset of the second time unit set.

As one embodiment, the K1 time unit sets are respectively configured to K1 reference signal resources, or the K1 time unit sets are configured to the same reference signal resource.

As one embodiment, the serving cell of the first node receives first information from the target cell through an Xn interface, and the first information is used for triggering transmission of the target signaling.

As one embodiment, the first signaling is transmitted on a serving cell of the first node.

As one embodiment, the target signaling is transmitted on a serving cell of the first node.

As one embodiment, a sender of the target signaling includes the target cell.

As one embodiment, the first information is used for indicating that the target cell enters into a first state.

As one embodiment, the target signaling is used for indicating that the target cell enters into a first state.

As one embodiment, the target signaling is used for indicating that the target cell enters into the first state in the present application, and the target cell entering into the first state in the present application is used for indicating the first time unit set.

As one embodiment, a characteristic of the first state includes that the target cell sends a reference signal in the first time unit set.

As one embodiment, a characteristic of the first state includes that the target cell stops dynamic scheduling-based data transmission.

As one embodiment, the K1 is equal to 2, the K1 time unit sets are the first time unit set and the second time unit set respectively, and the K1 reference signal resources are the first reference signal resource and the second reference signal resource respectively; and the first time unit set and the second time unit set are respectively configured to the first reference signal resource and the second reference signal resource.

As one embodiment, K1 is equal to 2, the K1 time unit sets are respectively the first time unit set and the second time unit set, and both the first time unit set and the second time unit set are configured to the first reference signal resource.

As one sub-embodiment of this embodiment, the first time unit set and the second time unit set correspond to different configuration periods respectively.

As one sub-embodiment of this embodiment, the configuration period of the first time unit set is a positive integer multiple of the configuration period of the second time unit set.

As one embodiment, the first node is user equipment.

As one embodiment, the first node is a relay node device.

As one embodiment, the first receiver 1501 includes at least one of {an antenna 452, a receiving device 454, a receiving processor 456, a multi-antenna receiving processor 458, a controller/processor 459, a memory 460, and a data source 467} in Embodiment 4.

### Embodiment 16

Embodiment 16 illustrates a structural block diagram of a processing apparatus used in a second node according to one embodiment of the present application, as shown in FIG. 15. In FIG. 16, a processing apparatus 1600 in the second node includes a first transmitter 1601.

In Embodiment 16, the first transmitter 1601 sends first signaling, the first signaling being used for configuring K1 time unit sets; sends target signaling, the target signaling being used for determining a first time unit set from the K1 time unit sets, a recipient of the target signaling includes a first node, and the first node performs wireless resource management measurement on the basis of a reference signal in the first time unit set; K1 is a positive integer greater than 1, the K1 time unit sets are all associated to a target cell, the target cell is a cell other than a serving cell of the first node, and the target signaling is MAC layer signaling or physical layer signaling.

As one embodiment, the target signaling is used by the first node to determine a time interval between downlink timing of the first signaling and downlink timing of the reference signal transmitted in the first time unit set.

As one embodiment, the target signaling is used by the first node to determine an effective moment of the reference signal in the first time unit set.

As one embodiment, the target signaling is used by the first node to determine a first power offset value from a plurality of power offset values, the first power offset value is used for mobility management for the target cell, and the plurality of power offset values are associated to the target cell.

As one embodiment, the K1 time unit sets include at least the first time unit set and the second time unit set, and the first time unit set is a subset of the second time unit set.

As one embodiment, the K1 time unit sets are respectively configured to K1 reference signal resources, or the K1 time unit sets are configured to the same reference signal resource.

As one embodiment, the serving cell of the first node receives first information from the target cell through an Xn interface, and the first information is used for triggering transmission of the target signaling.

As one embodiment, a sender of the target signaling includes a node other than the second node.

As one embodiment, the first information is used for indicating that the target cell enters into a first state.

As one embodiment, the target signaling is used for indicating that the target cell enters into a first state.

As one embodiment, the target signaling is used for indicating that the target cell enters into the first state in the present application, and the target cell entering into the first state in the present application is used for indicating the first time unit set.

As one embodiment, a characteristic of the first state includes that the target cell sends a reference signal in the first time unit set.

As one embodiment, a characteristic of the first state includes that the target cell stops dynamic scheduling-based data transmission.

As one embodiment, the K1 is equal to 2, the K1 time unit sets are the first time unit set and the second time unit set respectively, and the K1 reference signal resources are the first reference signal resource and the second reference signal resource respectively; and the first time unit set and the second time unit set are respectively configured to the first reference signal resource and the second reference signal resource.

As one embodiment, K1 is equal to 2, the K1 time unit sets are respectively the first time unit set and the second time unit set, and both the first time unit set and the second time unit set are configured to the first reference signal resource.

As one sub-embodiment of this embodiment, the first time unit set and the second time unit set correspond to different configuration periods respectively.

As one sub-embodiment of this embodiment, the configuration period of the first time unit set is a positive integer multiple of the configuration period of the second time unit set.

As one embodiment, the second node is a base station device.

As one embodiment, the second node is user equipment.

As one embodiment, the second node is a relay node device.

As one embodiment, the second node includes one TRP.

As one embodiment, the second node includes one CU.

As one embodiment, the second node includes one DU.

As one embodiment, the first transmitter 1601 includes at least one of {an antenna 420, a transmitting device 418, a transmitting processor 416, a multi-antenna transmitting processor 471, a controller/processor 475, and a memory 476} in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, radio frequency identification (RFID) terminals, narrow band Internet of Things (NB-IoT) terminals, machine type communication (MTC) terminals, enhanced MTC (eMTC) terminals, data cards, Internet cards, vehicle-mounted communication devices, low-cost mobile phones, low-cost tablet computers, and other wireless communication devices. The base stations or system devices in the present application include but are not limited to macrocell base stations, microcell base stations, small cell base stations, femtocells, relay base stations, evolved Nodes B (eNBs), gNBs, TRPs, global navigation satellite systems (GNSSs), relay satellites, satellite base stations, aerial base stations, RSUs, drones, test devices, such as transceiving apparatus or signaling testers that simulate some functions of the base stations, and other wireless communication devices.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be included therein.

## Claims

1. A first node used for wireless communication, comprising:
a first receiver for receiving first signaling, the first signaling being used for configuring K1 time unit sets; receiving target signaling, the target signaling being used for determining a first time unit set from the K1 time unit sets; and performing wireless resource management measurement on the basis of a reference signal in the first time unit set,
wherein K1 is a positive integer greater than 1, the K1 time unit sets are all associated to a target cell, the target cell is a cell other than a serving cell of the first node, and the target signaling is MAC layer signaling or physical layer signaling.

2. The first node according to claim 1, wherein the target signaling is used for determining a time interval between downlink timing of the first signaling and downlink timing of the reference signal transmitted in the first time unit set.

3. The first node according to claim 1 or 2, wherein the target signaling is used for determining an effective moment of the reference signal in the first time unit set.

4. The first node according to any one of claims 1 to 3, wherein the target signaling is used for determining a first power offset value from a plurality of power offset values, the first power offset value is used for mobility management for the target cell, and the plurality of power offset values are associated to the target cell.

5. The first node according to any one of claims 1 to 4, wherein the K1 time unit sets comprise at least the first time unit set and a second time unit set, and the first time unit set is a subset of the second time unit set.

6. The first node according to any one of claims 1 to 5, wherein the K1 time unit sets are respectively configured to K1 reference signal resources, or the K1 time unit sets are configured to the same reference signal resource.

7. The first node according to any one of claims 1 to 6, wherein the serving cell of the first node receives first information from the target cell through an Xn interface, and the first information is used for triggering transmission of the target signaling.

8. A second node used for wireless communication, comprising:
a first transmitter for sending first signaling, the first signaling being used for configuring K1 time unit sets; and sending target signaling, the target signaling being used for determining a first time unit set from the K1 time unit sets,
wherein a recipient of the target signaling comprises a first node, and the first node performs wireless resource management measurement on the basis of a reference signal in the first time unit set, K1 is a positive integer greater than 1, the K1 time unit sets are all associated to a target cell, the target cell is a cell other than a serving cell of the first node, and the target signaling is MAC layer signaling or physical layer signaling.

9. A method for a first node used for wireless communication, comprising:
receiving first signaling, the first signaling being used for configuring K1 time unit sets;
receiving target signaling, the target signaling being used for determining a first time unit set from the K1 time unit sets; and
performing wireless resource management measurement on the basis of a reference signal in the first time unit set,
wherein K1 is a positive integer greater than 1, the K1 time unit sets are all associated to a target cell, the target cell is a cell other than a serving cell of the first node, and the target signaling is MAC layer signaling or physical layer signaling.

10. A method for a second node used for wireless communication, comprising:
sending first signaling, the first signaling being used for configuring K1 time unit sets; and
sending target signaling, the target signaling being used for determining a first time unit set from the K1 time unit sets,
wherein a recipient of the target signaling comprises a first node, and the first node performs wireless resource management measurement on the basis of a reference signal in the first time unit set, K1 is a positive integer greater than 1, the K1 time unit sets are all associated to a target cell, the target cell is a cell other than a serving cell of the first node, and the target signaling is MAC layer signaling or physical layer signaling.
